# EUROPEAN PATENT APPLICATION

(11) **EP 2 402 074 A1**
(43) Date of publication of application: **04.01.2012**
(21) Application number: 10168010.6
(22) Date of filing: 30.06.2010
(51) Int. Cl.: B01J 8/00, B01J 8/02, C01C 1/04

(54) **A process for selective removal of reaction products from a gaseous system**

(71) Applicant: Ammonia Casale S.A., 6900 Lugano-Besso (CH)
(72) Inventor: Panza, Sergio, 22100 Como (IT)
(74) Representative: Zardi, Marco

(57) **Abstract**

A process for selective removal of at least a gaseous reaction product (P) from a gaseous system, the molecule of said reaction product having a non-zero electric dipole moment and the other gaseous components of said gaseous system having molecules with electric dipole moment which is null or negligible compared to the electric dipole moment of molecule of said reaction product; a non-uniform electric field (4) being generated between at least a positive electrode (2) and a negative electrode (1), said positive electrode and negative electrode being located at opposite sides of at least one permeation membrane (3), the selective passage of said reaction product through said membrane being enhanced by said electric field.

## Description

### Field of the invention

The invention relates to methods for carrying out chemical reactions and related reactors. The invention relates in particular to selective removal of reaction products from a system comprising reagents and products. The invention is applicable to several processes such as synthesis of ammonia, methanol, DME, nitric acid, sulphuric acid which are cited as non limitative examples.

### Prior Art

Removal of reaction products is a known measure to positively shift the chemical equilibrium in a system comprising reagents and products, so to increase the yield of a chemical reaction. For example, reactors for production of hydrogen often make use of membrane-based selective removal of hydrogen.

A selective permeation membrane reactor is disclosed e.g. in EP-A-1 892 216.

Membrane-based selective permeation is sensitive the physical size of molecules, as smaller molecules are allowed to pass more easily through the membrane. Selective removal of hydrogen, for example, is convenient due to small molecule of H₂. This means that a membrane-based system has a poor efficiency when products and reagents have a comparable molecular size, and is even less efficient when a product has a molecular size smaller than one or more of reagents.

For example, the ammonia (NH₃) molecule has a size of 2.90 Angstrom (A) which is between the size of molecular hydrogen (2.83 A) and nitrogen (3.78 A) and, thus, a selective removal of NH₃ with conventional membranes is not efficient, because a significant amount of hydrogen would escape from the system, together with ammonia. The same happens e.g. in the synthesis of methanol since the size of the molecule CH₃OH is comparable with that of carbon oxide and carbon dioxide and, then, selective removal is not efficient.

The above drawback can be reduced using specific membranes. According to the chemical reaction, however, the membranes may need to operate at a high temperature such as hundreds of °C, high pressure and/or in aggressive environment. Hence, the choice of the membranes may be restricted; moreover, a specific membrane may be expensive. In any case, the above drawback is not completely solved.

A consequence of a poor yield of the chemical reaction is that the output stream of a reactor contains a significant amount of unconverted reagents. Aiming to recover at least part of said reagents, a relevant fraction of the output stream is usually re-circulated to the reactor; the power demand for compressing back the output stream at the pressure of the chemical reaction, however, affects the overall efficiency of the process.

### Summary of the invention

The invention provides a novel method for selective removal of at least one reaction product from a system comprising said reaction product and one or more reagents, and eventually further product(s), in a gaseous state. The idea underlying the invention is to use the electric dipole moment (EDM) of the molecules, to enhance separation.

A process for selective removal of reaction product(s) from a gaseous system, said reaction product(s) having a non-zero electric dipole moment and the other components of said gaseous system having an electric dipole moment which is null or negligible compared to the electric dipole moment of said reaction product(s); a non-uniform electric field being generated between at least a positive electrode and a negative electrode, said positive and negative electrode being located at opposite sides of at least one permeation membrane.

Basically a non-uniform electric field can be distinguished by an uniform electric field for the following reasons:
- the electric field line density through the surface of one of the two electrodes that are creating the electric field is greater than the line density on the other:
- the magnitude of the electric field is greater in the surface of one of the two electrodes;
- the electric field lines at different locations point to different directions.

The components other than the reaction products, in the gaseous system, comprises in particular the reagents.

According to a first embodiment of the invention, said electric dipole moment is a permanent dipole moment, that is an intrinsic feature of the molecule of said reaction product or products. According to a second embodiment, said electric dipole moment is induced by an external electric field, in a substantially nonpolar molecule. Hence, in some embodiments of the invention, said reaction gaseous products are polarisable upon the application of a non-uniform electric field, and the other components of the system are not or negligibly polarisable.

In both the above case, the invention is based on the finding that the reaction product(s) Vs. the other components of the gaseous system are different in terms of sensitivity to an electric field. Molecules of the reaction products with a significant EDM are highly sensitive to the electric field, while the same electric field is substantially neutral to the other gaseous substances, namely the reagents. Hence, application of an electric field helps to achieve a selective separation of the reaction products through the membrane, higher concentration of reagents in the system and then a better yield of the reaction.

A polarisable molecule is intended as a molecule that does not have a permanent EDM but under an electric field tends to form an electric dipole, opposing to the external electric field.

A non exhaustive list of preferred application of the invention is the synthesis of: ammonia, methanol, DME, nitric acid, sulphuric acid etc.. The molecules of ammonia and methanol have a significant dipole moment and then are suitable for application of the invention. The following is an example of dipole moment in Debye (D). Conversion in SI units is given by the equation 1 C·m (coulomb metre) = 2.99792458 10²⁹ D.

| Molecule | Dipole moment (D) |
|---|---|
| H₂ | 0 |
| N₂ | 0 |
| NH₃ | 1.47 |
| CH₃OH | 1.7 |
| CO₂ | 0 |
| CO | 0.11 |
| H₂O | 1.8 |
| SO₂ | 1.6 |
| SO₃ | 0 |
| NO | 0.15 |
| NO₂ | 0.33 |

Advantageously, if the dipole moment of species involved is higher than 0.3 D and differs by at least 50% between reagents and products, an efficient separation is achieved. The above however shall not be intended as a limitation for application of the invention.

The above values show that ammonia (NH₃) can be efficiently separated, by means of the invention, from the reagents nitrogen (N₂) and hydrogen (H₂), in a more efficient way compared to conventional membrane-based systems. More generally, the invention is applicable when the products of a chemical reaction have a dipole moment either permanent or induced by polarisation, which is significantly greater than the dipole moment of the reagents or intermediate products involved in the reaction. It is preferred that the dipole moment of the reagents is null, but the invention is also applicable when the dipole moment of the reagents is non-zero but negligible, for example at least ten times smaller, than that of the reaction product(s).

In some cases where the difference in terms of dipole moment is not significant, a different electric polarizability among the species can be exploited; electric polarizability is herein intended as the tendency of a charge distribution, for instance the electron cloud of an atomic or molecular species, to be distorted from its normal shape. This distortion can be caused by an external electric field.

The chemical reaction can be carried out in one or more catalytic beds, although this feature is not essential for carrying out the invention. When the chemical reaction involves catalytic bed(s), the process of the invention can be carried out directly in a catalytic bed, or upstream or downstream a catalytic bed, or between two catalytic beds when more than one bed is used. The invention is applicable regardless of the flow in the catalytic bed, that can be for example axial, radial, mixed axial-radial, cross flow or horizontal. In some embodiments of the invention, a heat exchanger is embedded in a catalytic bed for isothermal operation, i.e. for keeping the temperature of the bed within a given range by furnishing or removing heat.

In multiple-bed embodiments, removal of the reaction products between two catalytic beds, namely from the gaseous mixture exiting a first catalytic bed, allows to feed a more reactive mixture to the second catalytic bed.

An aspect of the invention is also a reactor adapted to carry out the process.

In a preferred embodiment, a chemical reactor comprises at least an inlet for a charge of reagents, a reaction space and a product collector, at least a portion of said reaction space being in communication with said product collector by means of a permeable membrane, and is characterized in that at least a positive electrode and at least a negative electrode are placed at opposite sided of said membrane, so that field lines of an electric field established between said electrodes cross said membrane, and in that a non-uniform electric field is created between said electrode during the use, to enhance selective removal of reaction product(s) from said reaction space.

The reactor may comprise one or more positive electrode and one or more negative electrode. The term "pole", in the rest of the description, is used with reference to one electrode or a set of electrodes. Electrodes can be in any form; examples are elongated electrodes in the form of bars, or substantially two-dimensional electrodes in the form of plates or wall elements.

The chemical reactor may comprise one catalytic bed or more catalytic beds in a pressure vessel. Preferably, the positive or negative electrodes may be immersed in the catalytic bed. In a preferred embodiment, the membrane corresponds substantially to a wall of the catalytic bed, separating the bed from a product collector; one pole is immersed in the catalytic bed, and the other pole is outside the bed, preferably in the product collector. Hence, the electric field which is formed between the two poles, during the use, promotes the passage of products molecules from the catalytic bed towards the product collector.

In a preferred embodiment having a cylindrical symmetry, the catalytic bed has substantially an annular structure and is arranged around a central pipe which constitutes the product collector. A cylindrical wall element immersed in the catalytic bed forms the negative electrode, while one or more positive electrodes are arranged inside the central pipe. A permeable membrane forms a portion of a boundary surface between the annular catalytic bed and the central duct.

The main advantage of the invention is the better conversion of the reagents, due to the ability to shift the equilibrium of the reaction by removing products form the system. Generally speaking, a synthesis section of a chemical product, is made more efficient and less energy consuming. Another related advantage is the lower consumption for the feed of the reagents: this advantage is felt e.g. in the synthesis of methanol, where the power for compression of the make-up gas containing the reagents is significant. The need to consume power for recirculating the gaseous products is also reduced. It should be noted that another effect of the invention is that the chemical reaction delivers more heat, due to the better yield of conversion. When the heat removal produces a useful effect, for example heat is removed producing hot steam which is used in the process, a further advantage is produced.

The invention will now be elucidated with the help of the following description of preferred and non-limiting embodiments.

### Brief description of the drawings

Fig. 1 is scheme of a method for removal of products form a gaseous mixture, according to one embodiment of the invention,
Fig. 2 is a sketch of an axial-radial flow converter according to one of the embodiments of the invention.
Fig. 3 is a sketch of a converter according to another embodiment of the invention.

### Detailed description of preferred embodiments

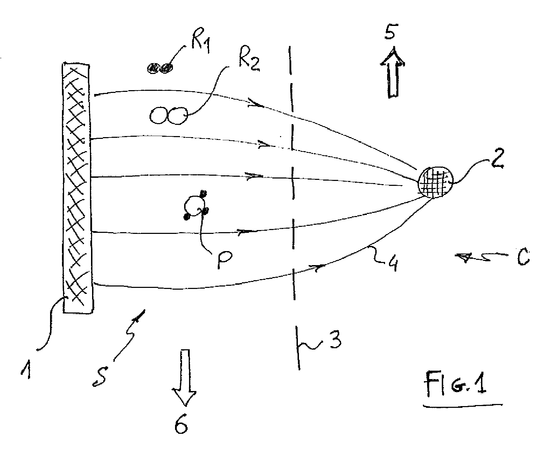

Referring to Fig. 1, numeral 1 denotes a first electrode and numeral 2 denotes a second electrode. Electrodes 1 and 2 are located at opposite sides of a permeable membrane 3. In the example, electrode 1 is negative and electrode 2 is positive; when the electrodes are powered, the lines of the electric field 4 are conventionally arranged according to Fig. 1, from the negative electrode 1 to the positive electrode 2, passing through the membrane 3.

The membrane 3 separates a reaction space S from a product-collecting region C. The reaction space S is fed with a make-up gas comprising reagents whose molecules are shown as R₁ and R₂. Said reagents are converted into a product P. The molecule of said product P has an electric dipole moment while R₁ and R₂ are electrically neutral or have a negligible dipole moment. Molecules of P are sensitive to the electrical field 4, while R₁ and R₂ are substantially insensitive to the field. Under the action of the electric field 4, the molecules of P tends to concentrate on the positive electrode 2; as a consequence, a gaseous product 5 with enhanced content of P is obtained in the region C. If the reaction space S is followed by another reaction space(s), said space S can deliver a gaseous stream 6 with a low content of P which means a higher concentration of reagents.

Fig. 1 relates to an exemplificative case when molecules of R₁ are allowed to pass through the membrane 3 due to their little size and, hence, a certain amount of R₁ is found in the gaseous product 5. However the electric field tends to direct the molecules of P towards the membrane, while molecules of R₁ remain evenly distributed in the space S. This means that the P/R₁ ratio in the gaseous product 5 is more favourable than what is obtained with a conventional membrane-based technique. In other words, the selectiveness of the removal of product P from space S is greater and loss of useful reagent R₁ is contained.

For example, in a preferred application R₁ is hydrogen, R₂ is nitrogen and the product P is ammonia.

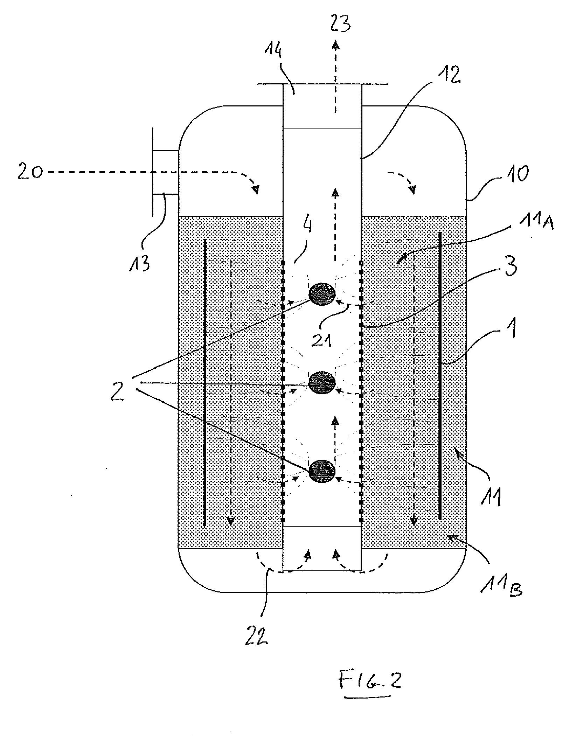

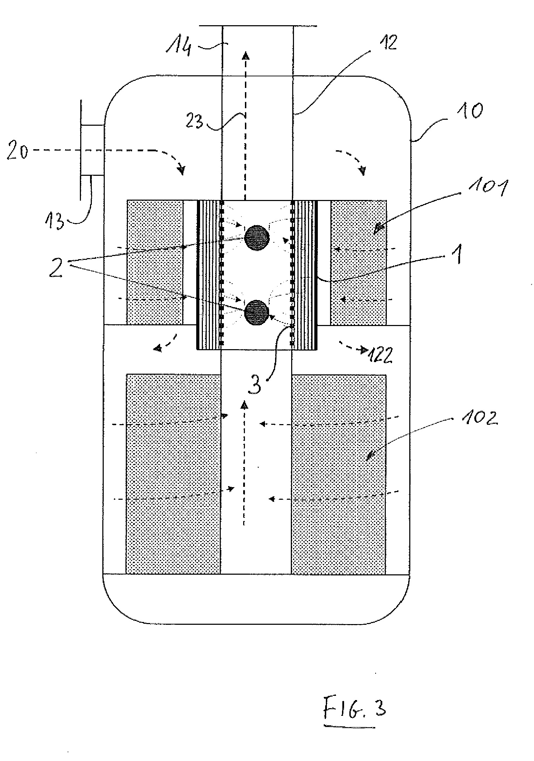

A catalytic bed may be provided in the space S. Two examples are given in Fig. 2 and 3.

Fig. 2 shows a reactor comprising a cylindrical vessel 10 containing an annular catalytic bed 11, arranged around a central duct 12. The reagents enter at an inlet 13 and flows axially through the bed 11. Products are collected by the central duct 12, which is in communication with the outlet 14. A tube or plate heat exchanger can be immersed in the catalytic bed 11 to maintain a quasi-isothermal operation. Such arrangement of an axial flow reactor is known, and no further described.

A negative electrode 1 is provided in the form of a cylindrical wall inside the bed 11, and preferably away from duct 12, i.e. close to the wall of the vessel 10. A plurality of positive electrodes 2 are placed inside the duct 12. A permeable membrane 3 forms a portion of boundary surface between the bed 11 and the duct 12.

In use, a make-up gas 20 containing the reagents enters at inlet 13, and is gradually converted while flowing in the bed 11. The product stream 23 is formed by a number of intermediate, radial flows 21 through the membrane 3, and a bottom flow 22. The concentration of products in the intermediate radial flows 21 is enhanced by the electrical field 4 between the electrode 1 and the electrodes 2. The conversion rate is strong not only in the upper region 11A of the catalytic bed, but also in the lower region 11 B where, in conventional systems, the reaction is usually less effective.

In the embodiment of Fig. 3, selective removal of products takes place in a heat exchanger between two annular catalytic beds 101 and 102 contained in the vessel 10. The electrodes 1 and membrane 3 are cylindrical elements, concentrically arranged inside the first bed 101. Appropriate heat exchange elements, e.g. to cool the gaseous products, are arranged between the electrode 1 and membrane 3. The electrodes 2 are inside the duct or pipe 12, as in the previous example of Fig. 2. The output 122 of the first bed 101 is directed to the lower bed 102. In this case, the benefit of the invention is a better exploitation of the second bed 102.

## Claims

1. A process for selective removal of at least a gaseous reaction product (P) from a gaseous system, the molecule of said reaction product having a non-zero electric dipole moment and the other gaseous components (R₁, R₂) of said gaseous system having molecules with electric dipole moment which is null or negligible compared to the electric dipole moment of molecule of said reaction product; a non-uniform electric field (4) being generated between at least a positive electrode (2) and a negative electrode (1), said positive electrode and negative electrode being located at opposite sides of at least one permeation membrane (3), the selective passage of said reaction product through said membrane being enhanced by said electric field.

2. A process according to claim 1, the molecule of said reaction product having a permanent electric dipole moment.

3. A process according to claim 1, the electric dipole moment of the molecule of said reaction product being induced by said electric field, the molecules of the reaction product being polarisable upon the application of a non-uniform electric field, and the molecules of other components of the gaseous system being not or negligibly polarisable by said field.

4. A process according to any of the preceding claims, the selective removal of said product being carried out directly in a catalytic bed, or upstream or downstream a catalytic bed, or between two catalytic beds.

5. A process according to any of the preceding claims, said product being any of ammonia, methanol, DME, nitric acid, sulphuric acid.

6. A chemical reactor comprising an inlet (13) for a charge of reagents, a reaction space and a product collector (12), at least a portion of said reaction space being in communication with said product collector by means of a permeable membrane (3), the reactor being **characterized in that**: at least a positive electric pole and at least a negative electric pole are placed at opposite sided of said membrane (3), so that an electric field (4) established between said poles is crossing said membrane, and **in that** a non-uniform electric field is created between said electrode during the use, said electric field being suitable to enhance selective removal of reaction product(s) from said reaction space through said membrane.

7. A reactor according to claim 6, comprising a pressure vessel (10) and a catalytic bed (11) inside said vessel, where one of said electric poles is immersed in the catalytic bed, and the other of said pole is located in the product collector (12).

8. A reactor according to claim 7, the catalytic bed (11) having substantially an annular structure and being arranged around a central pipe (12) which constitutes a product collector, a cylindrical wall element (1) immersed in the catalytic bed forming the negative electrode, and one or more positive electrodes (2) being arranged inside said central pipe, and a permeable membrane (3) forming a portion of a boundary surface between said annular catalytic bed and said central pipe.

9. A reactor according to claim 6, comprising an upper catalytic bed (101) and a lower catalytic bed (102), both having an annular structure, the upper and lower bed being arranged around a central pipe (12) which constitutes a product collector, wherein said electric poles and membrane are arranged coaxially inside the first bed.
